# EUROPÄISCHE PATENTSCHRIFT

(11) **EP 1 324 475 B1**
(45) Veröffentlichungstag und Bekanntmachung des Hinweises auf die Patenterteilung: **09.11.2005**
(21) Anmeldenummer: 02026120.2
(22) Anmeldetag: 23.11.2002
(51) Int. Cl.: H02K 29/10, H02K 5/22, H02K 11/00

(54) **Motor-Sensor-System**
Motor-sensor-system
Système de moteur et détecteur

(30) Priorität: 24.12.2001 DE 10164078
(43) Veröffentlichungstag der Anmeldung: 02.07.2003
(73) Patentinhaber: PWB-Ruhlatec Industrieprodukte GmbH, 99846 Seebach (DE)
(72) Erfinder: Tenca, Vittorio, 37013 Caprino Veronese (IT); Bari, Andrea, 37126 Verona (IT); Canotti, Ernesto, 37057 S.Giovanni Lupatoto (IT); Carradoni, Corrado, 37026 Pescantina (IT)
(74) Vertreter: Müller-Wolff, Thomas

(56) Entgegenhaltungen:
- US-A- 5 155 401

## Beschreibung

Die Erfindung betrifft ein Motor-Sensor-System, bestehend aus einem Elektromotor mit encoderseitigem Wellenende, einer Befestigungsvorrichtung für den Motor, Anschlüssen für die Energieversorgung und einer an der Unterseite des Motors anliegenden Leiterplatte mit Elektronikkomponenten für die Steuerung und Regelung einer Encodereinheit.

Aus der US-A-5,155,401 ist ein Recordermotor mit einem Encoder bekannt. Der Recordermotor und der Encoder sind jeweils in einem Gehäuse untergebracht, wobei die Anschlüsse für den Motor und den Encoder durch die Gehäuseabdeckung hindurch auf eine gemeinsame Leiterplatte geführt sind.

Bei Encodersystemen bestehen hohe Anforderungen hinsichtlich der Zuverlässigkeit bei schwankenden Temperaturverhältnissen, der Genauigkeit der Positionierung und der Auflösungsqualität. Da es sich um Großserienteile handelt, werden fertigungsgerechte Konstruktionen verlangt, die mit möglichst einfachen, störungsunanfälligen und möglichst wenigen Bauteilen auskommen.

Diese Anforderungen werden in hervorragender Weise durch ein neues Motor-Sensor-System gemäß Anspruch 1 erfüllt, das aus zwei vorgefertigten Bauteilen über eine neue Befestigungsvorrichtung zusammengefügt wird.

Die beiden Bauteile bestehen in einem Elektromotor mit encoderseitigem Wellenende und in einer mit elektronischen Bauteilen bestückten Leiterplatte. Im Motor-Bauteil sind exaktvermessene Bohrungsanschlüsse für Kontaktstifte eingeformt. Die Kontaktstifte sind wiederum an der Leiterplatte positionsgenau befestigt. Beim Ineinanderschieben der Kontaktstifte in die Bohrungsanschlüsse des Motors findet somit eine erste Positionierung der Baueinheit Motor/Leiterplatte in der x-y-Ebene der Bauteile statt.

Auf der Leiterplatte ist auch eine Sensor- Emittereinheit so angeordnet, dass sie beim Einschieben der Kontaktstifte positonsgenau in Bezug auf das encoderseitige Wellenende auf das später eine Taktscheibe aufgesetzt wird, ausgerichtet wird. Sodann kann in der z-Ebene eine winkelförmige Befestigungsklammer von oben über den Motor geschoben und mit den Enden in entsprechend vorbereitete Schlitze der von unten angeschlossenen Leiterplatte eingefügt werden. Durch die besondere Formgebung der Klammer (dreiseitiger Formschluss) können sowohl die Stirnseite als auch eine Längsseite des Elektromotors als Führungsfläche genutzt werden. Über eine mechanische und/oder thermische Bearbeitung/Verformung zwischen den Zapfenenden und den Schlitzen in der Leiterplatte erfolgt die kraftschlüssige Verbindung zwischen der Dachfläche (Oberseite) des Motors und der Basisfläche (Unterseite). Eine radiale Aussparung an der Stirnseite der Befestigungsklammer verbessert die Positionierungsgenauigkeit und ermöglicht eine Zentrierung in der Frontebene (x,y,z-Ebene).

Im folgenden wird die Erfindung anhand eines Ausführungsbeispieles näher erläutert. Es zeigen:
- Figur 1: das Motor-Sensor-System vor dem Zusammenbau
- Figur 2: Motor-Sensor-System in Seitenansicht nach dem Zusammenbau
- Figur 3: Frontalansicht des Motor-Sensor-Systems
- Figur 4: perspektivische Ansicht der Motor-Sensor-Systems

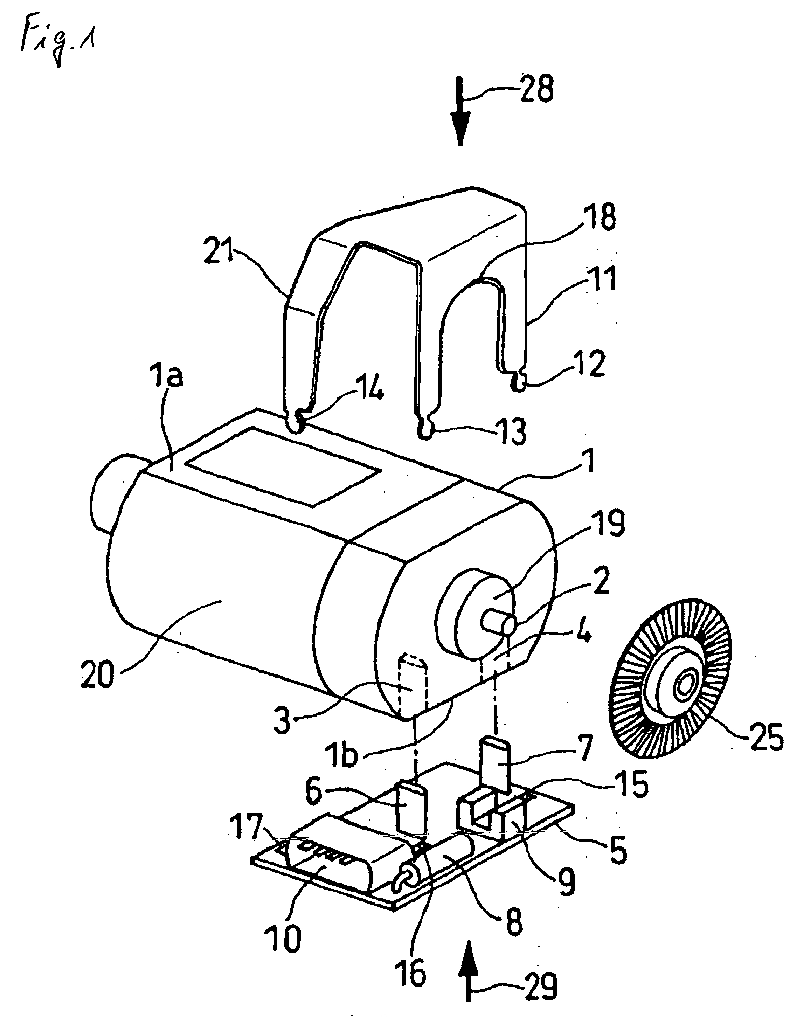

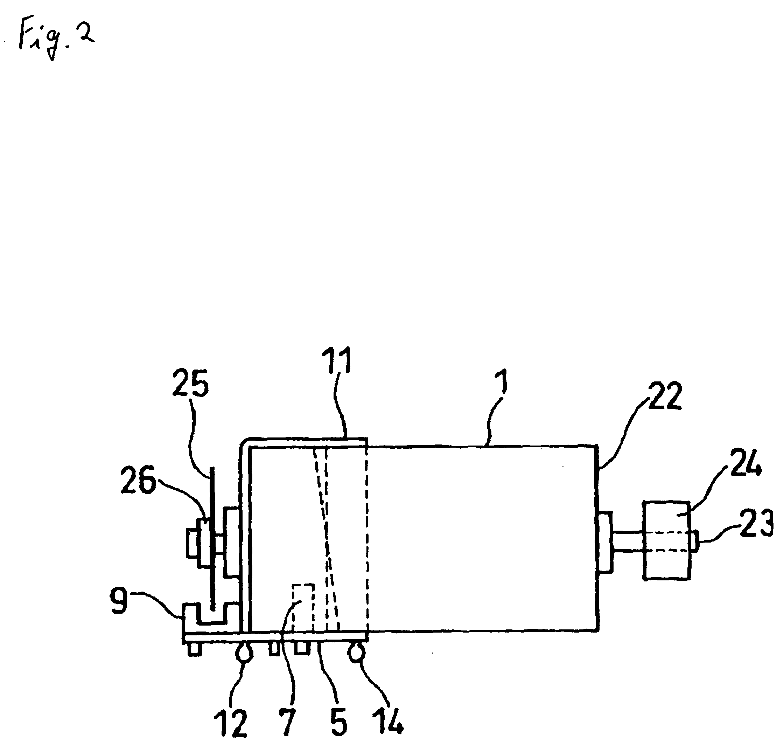

In Figur 1 ist Motor 1 mit dem encoderseitigen Wellenende 2 als zylindrisches Bauteil je einer abgeflachten Ober- und Unterseite 1a, 1b dargestellt. Auf der abgeflachten Seite 1b sind zwei Bohrungsanschlüsse 3, 4 im Motorgehäuse für die Verbindung zur Leiterplatte 5 eingebracht.

Die Leiterplatte 5 umfasst neben den zwei Kontaktstiften 6, 7 zum Einführen in die Bohrungsanschlüsse 3, 4 noch elektronische Bauteile wie Widerstand 8, Sensor-Emittereinheit 9 und Steckverbinder 10. Weitere Bauteile wie z.B.die Leiterbahnen sind auf der nicht sichtbaren Rückseite der Leiterplatte angeordnet.

Nach dem Ineinanderfügen der Kontaktstifte und der Bohrungsanschlüsse wird die klammerartig ausgebildete Befestigungsvorrichtung 11 von oben - also von der der Leiterplatte 5 gegenüberliegenden Seite des Motors 1a - in Pfeilrichtung auf den Motor 1 gesteckt und mit den Zapfenenden 12, 13, 14 in entsprechend ausgebildete Führungsschlitze 15, 1-6, 17 auf der Leiterplatte 5 zusammengefügt. Die eigentliche Festigkeit erhält die Verbindung durch mechanisches Verdrehen oder Verbiegen der Zapfenenden 12, 13, 14 oder thermisch durch Verlöten, was in einem Arbeitsgang bewirkt werden kann.

Für eine selbstzentrierende Positionierung der Sensor-Emittereinheit 9 in Bezug auf das Wellenende 2 ist durch einen halbrunden Ausschnitt 18 gesorgt. Als Anschlagfläche zur passgenauen Einführung dient ein zylindrischer Flansch 19 am Wellenende 2. Als weitere Anschlagfläche ist eine Seitenfläche 20 des Elektromotors 1 vorgesehen, die von einem abgewinkelten Ende 21 der klammerartigen Befestigung 11 umgriffen wird.

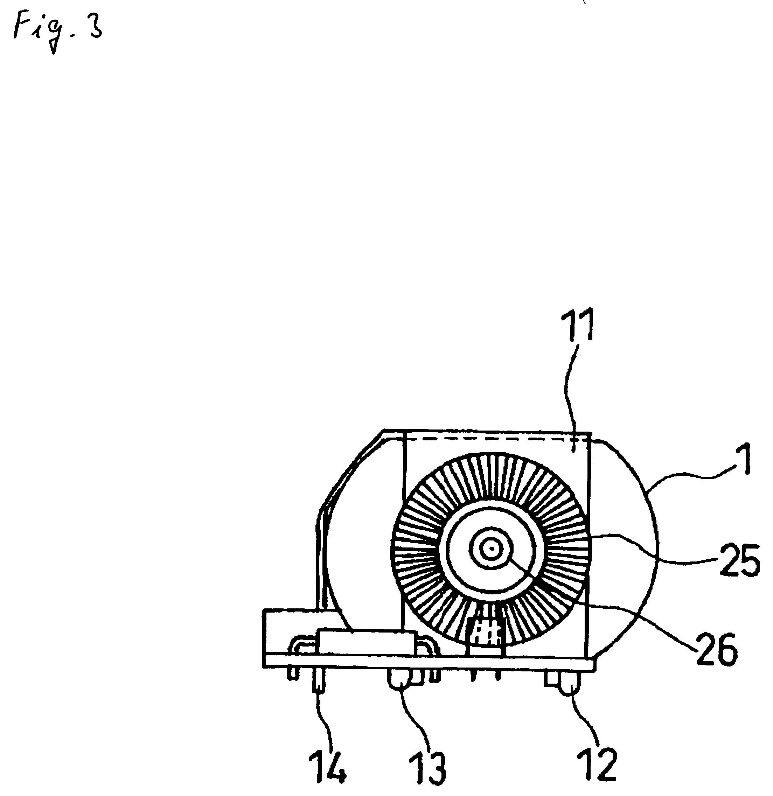

Die Figuren 2, 3 und 4 zeigen das Motor-Sensor-System im zusammengebauten Zustand aus 3 verschiedenen Perspektiven. In Figur 2 ist der Motor 1 mit der klammerartigen Befestigungsvorrichtung 11 in Seitenansicht dargestellt, wobei zusätzlich eine Getriebeseite 22 mit Welle und Ritzel 23, 24 zur mechanischen Verbindung mit weiteren Steuerungseinheiten des Encodersystems angedeutet ist.

Auf der Unterseite des Motors 1 befindet sich die Leiterplatte 5 mit Sensor-Emittereinheit 9 sowie einem Fußende des Kontaktstiftes 7 und den Zapfenenden 12, 14 der Haltevorrichtung 11. Des weiteren ist eine Taktscheibe 25 mit Taktscheibennabe 26 in Seitenansicht dargestellt.

Die Taktscheibe und die Taktscheibennabe 25, 26 sind ebenfalls in der Frontansicht des Motors 1 gemäß Figur 3 erkennbar. Darüberhinaus ist die Frontseite der Haltevorrichtung 11 mit den vorderen Zapfenenden 12, 13 und - etwas verdeckt dem hinteren Zapfenende 14 dargestellt.

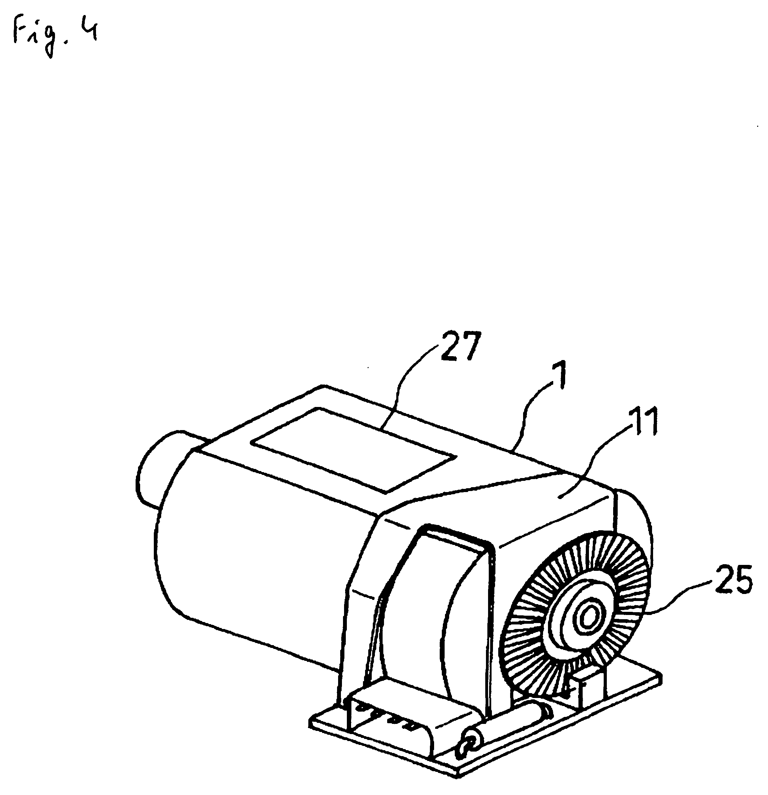

Die obigen Ausführungen lassen eine platzsparende und damit besonders gewichtsreduzierte Ausführung der Haltevorrichtung 11 erkennen. Dadurch können zusätzliche Beschriftungsflächen 27 auf der Oberseite des Motors 1 genutzt werden. Aus der perspektivischen Ansicht gemäß Figur 4 ist erkennbar, dass das Motor-Sensor-System aus drei Bauteilen, nämlich dem Motor 1, der Haltevorrichtung 11 und der Leiterplatte 5 zusammengesetzt ist, wobei die Fertigung nur in einer bevorzugten Richtung, die in Figur 1 mit den Pfeilen 28, 29 angedeutet ist, erfolgt. Alle Führungsflächen sind selbstzentrierend, so dass zur Fertigstellung keine weiteren Hilfseinrichtung benötigt werden. Auch eine Nachjustierung erübrigt sich, da die vorgefertigten Bauteile vorher einzeln optisch überprüft wurden.

## Patentansprüche

1. Motor-Sensor-System, bestehend aus einem Elektromotor (1) mit encoderseitigem Wellenende (2), einer Befestigungsvorrichtung für den Motor, Anschlüssen für die Energieversorgung und einer an der Unterseite des Motors anliegenden Leiterplatte mit Elektronikkomponenten für die Steuerung und Regelung einer Encodereinheit, **dadurch gekennzeichnet,**
**dass** auf der stabilen Leiterplatte(5) mindestens zwei Kontaktstifte (6,7) für die Energieversorgung des Motors und zur Bildung von Kontaktführungen mit entsprechend geformten Bohrungsanschlüssen(3,4) im Motor positioniert sind,
**dass** die Befestigungsvorrichtung durch eine winkelförmige Befestigungsklammer (11) gebildet wird, die den Elektromotor (1) am encoderseitigem Wellenende (2) umgreift, dass die Befestigungsklammer (11) an der Oberseite, an der Stirnseite und zumindest an einer Längsseite des Motors anliegt, dass die Klammerenden als Zapfen(12,13,14) ausgebildet sind, die in der Leiterplatte (5) verankert sind, und dass die Befestigungsklammer eine Anschlagfläche für das encoderseitige Wellenende des Elektromotors aufweist, die senkrecht zur Ebene der Motorstirnfläche verläuft.

2. Motor-Sensor-System nach Anspruch 1,
**dadurch gekennzeichnet,**
**dass** der Elektromotor (1) mindestens eine abgeflachte Basisfläche für die Verbindung zur Leiterplatte (5) aufweist und die winkelförmige Befestigungsklammer um den Motor herumgreifend mit der Leiterplatte verbunden ist.

3. Motor-Sensor-System nach einem der vorhergehenden Ansprüche,
**dadurch gekennzeichnet,**
**dass** die winkelförmige Befestigungsklammer (11) zusammen mit der Leiterplatte (5) ein den Elektromotor (1) an mindestens 4 Seiten umgreifendes, offenes Gehäuse darstellt.

4. Motor-Sensor-System nach Anspruch 3,
**dadurch gekennzeichnet,**
**dass** die 4 Seiten des offenen Gehäuses gebildet werden aus einer Stirnseite, die am encoderseitigen Wellenende (2) des Elektromotors (1) anliegt, und drei miteinander verbundenen Anschlagflächen für die Ober-, Unter- und Seitenfläche des Elektromotors (1).

5. Motor-Sensor-System nach einem der vorhergehenden Ansprüche,
**dadurch gekennzeichnet,**
**dass** die Anschlagsfläche der winkelförmigen Befestigungsklammer an der Stirnseite als Kreis oder Kreissegmentfläche ausgebildet ist.

## Claims

1. A motor sensor system consisting of an electric motor (1) with a shaft end (2) at the encoder end, a fixing device for the motor, connections for the energy supply and a conductor plate with electronic components for controlling and regulating an encoder unit, which conductor plate is arranged at the underside of the motor,
**characterised in**
**that** on the solid conductor plate (5), there are positioned at least two contact pins (6, 7) for energy supply to the motor and for forming contact guides with correspondingly formed bore connections (3, 4) in the motor,
**that** the fixing device is formed by an angular fixing clamp (11) which embraces the electric motor (1) at the shaft end (2) at the encoder end, that the fixing clamp (11) rests against the upper side, the end face and at least against one longitudinal side of the motor, that the clamp ends are provided in the form of peg ends (12,13,14) which are anchored in the conductor plate (5) and that the fixing clamp comprises an abutment face for the shaft end (at the encoder end) of the electric motor, which abutment face extends perpendicularly relative to the plane of the end face of the motor.

2. A motor sensor system according to claim 1,
**characterised in**
**that** the electric motor (1) comprises at least one flattened base face for the connection to the conductor plate (5) and that the angular fixing clamp is connected to the conductor plate so as to embrace the motor.

3. A motor sensor system according to any one of the preceding claims,
**characterised in**
**that** the angular fixing clamp (11), together with the conductor plate (5), constitutes an open housing which embraces the electric motor (1) on at least four sides.

4. A motor sensor system according to claim 3,
**characterised in**
**that** the four sides of the open housing are formed by an end face contacting the shaft end (2) of the electric motor (1), which shaft end (2) is positioned at the encoder end, and three inter-connected abutment faces for the upper side, underside and side face of the electric motor (1).

5. A motor sensor system according to any one of the preceding claims,
**characterised in**
**that** the abutment face of the angular fixing clamp at the end face is provided in the shape of a circle or segment face of a circle.

## Revendications

1. Système de détection pour moteurs, comprenant un moteur électrique (1) avec un bout d'arbre coté codage (2), un dispositif de fixation du moteur, des raccordements pour l'alimentation en courant et une plaquette à circuit imprimé montée à la base du moteur, munie de composants électroniques permettant la commande et le réglage d'une unité de codage, **caractérisé par le fait**
**que** deux pointes de contact au moins (6,7) servant à l'alimentation en courant du moteur, ainsi qu'à la réalisation du guidage des contacts, soient positionnées sur la plaquette stable à circuit imprimé (5), avec des perforages de raccordement (3,4) dans le moteur, travaillés de façon adéquate,
**que** le dispositif de fixation soit formé d'une bride de fixation angulaire (11) qui encercle le moteur électrique (1) au bout d'arbre coté codage (2), que la bride de fixation (11) adhère à la face supérieure, à la face frontale, et au moins à un coté latéral du moteur, que les extrémités de la bride soient formées en tourillons (12,13,14), qu'ils soient ancrés dans la plaquette à circuit imprimé (5) et que la bride de fixation présente une surface adhérente au bout d'arbre coté codage du moteur électrique, perpendiculaire à la surface frontale du moteur.

2. Système de détection pour moteurs selon la revendication 1,
**caractérisé par le fait**
**que** le moteur électrique (1) présente au moins une surface de base plane pour la connexion à la plaquette à circuit imprimé (5) et que la bride de fixation angulaire encerclant le moteur, soit connectée à la plaquette à circuit imprimé.

3. Système de détection pour moteurs selon l'une des revendications décrites ci-dessus,
**caractérisé par le fait**
**que** la bride de fixation angulaire (11) connectée à la plaquette à circuit imprimé (5) constitue un boîtier ouvert, encerclant le moteur électrique (1) sur 4 cotés au moins.

4. Système de détection pour moteurs selon la revendication 3,
**caractérisé par le fait**
**que** les 4 cotés du boîtier ouvert soient formés par un coté frontal adhérant au bout d'arbre coté codage (2) du moteur électrique (1), ainsi que par 3 surfaces adhérentes, reliées les unes aux autres au coté supérieur, à la base et au coté latéral du moteur électrique (1).

5. Système de détection pour moteurs selon l'une des revendications décrites ci-dessus,
**caractérisé par le fait**
**que** la surface adhérente de la bride de fixation angulaire au coté frontal soit réalisée en forme de cercle ou de segment de cercle.
